(19) **Europäisches Patentamt**

**European Patent Office**

**Office européen des brevets**

(11) **EP 0 475 306 B1**

(12) **EUROPEAN PATENT SPECIFICATION**

(45) Date of publication and mention
of the grant of the patent:
**05.03.1997 Bulletin 1997/10**

(51) Int. Cl.$^6$: **C08F 110/06**, C08F 4/646

(21) Application number: **91115126.4**

(22) Date of filing: **06.09.1991**

(54) **Process for the production of amorphous elastomeric propylene homopolymers**

Verfahren zur Herstellung von amorphen, elastomerischen Propylenhomopolymeren

Procédé pour la préparation d'homopolymères amorphes élastomères de propylene

(84) Designated Contracting States:
**AT BE CH DE DK ES FR GB IT LI NL SE**

(30) Priority: **07.09.1990 US 578537**

(43) Date of publication of application:
**18.03.1992 Bulletin 1992/12**

(73) Proprietor: **Rexene Products Company
Dallas, Texas 75244 (US)**

(72) Inventors:
• **Pellon, Brian Jay
Ector County, Texas 79762 (US)**
• **Allen, George Cyrus
Ector County, Texas 79761 (US)**

(74) Representative: **Weinhold, Peter, Dr. et al
Patentanwälte
Dr. Weinhold, Dannenberg,
Dr. Gudel, Schubert
Siegfriedstrasse 8
80803 München (DE)**

(56) References cited:
**EP-A- 0 205 180        EP-A- 0 329 319
EP-A- 0 335 484        EP-A- 0 349 772
DE-A- 3 151 972        DE-A- 3 328 883**

EP 0 475 306 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.13.15/3.4

**Description**

This invention relates to a process for the production of elastomeric substantially amorphous propylene homopolymer. The polymer has properties which make it applicable for use as a thermoplastic elastomer in a variety of applications including films and film compositions.

Crystalline and amorphous polypropylenes are materials that are used in a wide variety of applications and billions of pounds of polypropylene homopolymers and copolymers are produced on an annual basis. Amorphous polypropylene is generally regarded as being predominantly comprised of an atactic propylene polymer. Alternatively, crystalline polypropylene is considered to be polypropylene that is comprised prevailingly of syndiotactic or isotactic polypropylene. The difference between isotactic, syndiotactic and atactic polypropylenes lies in the stereochemistries of the polymers. The substituent methyl groups of isotactic polypropylene are located on one side of the extended chain that makes up the polymer whereas syndiotactic propylene has methyl groups that alternate regularly from side to side. The regularity of the isotactic and syndiotactic structures allows the molecules to fit together well, resulting in a highly crystalline material. The methyl groups of atactic polypropylene, on the other hand, are distributed randomly along the polymer chain. Atactic polypropylenes are generally gummy materials of little strength that are used in the production of adhesives. The structure of isotactic, syndiotactic and atactic polypropylene is illustrated on p. 1248 of <u>Organic Chemistry</u> by Morrison and Boyd, fifth edition.

Highly crystalline isotactic polypropylenes make up the majority of commercially available polypropylenes. The isotactic structure results in polypropylene with high stiffness and good tensile strength. Crystalline polypropylene, however, generally has a high tensile set and is not suitable for those applications where elastomeric properties are desirable.

In the past, the manufacture of propylene homopolymers and copolymers using conventional polymerization techniques and unsupported catalysts resulted in the simultaneous production of substantial quantities of atactic polymer in addition to the desired highly crystalline and predominantly isotactic product. Various methods were used to separate and purify the two products and the atactic by-product was used commercially as a component in adhesive compounds, roofing materials, caulking compounds and the like. Over the last decade, however, major advances have been made in catalysts for the production of isotactic polypropylene. The use of highly active stereospecific catalysts has resulted in the production of isotactic homopolymers and copolymers that do not require purification or removal of the atactic or low crystalline polymer. The development of novel high molecular weight atactic propylene polymers has, however, received much less attention. A fractionable elastomeric polypropylene having a high molecular weight diethyl ether-soluble fraction that has about 0.5% to about 5% isotactic crystallinity and an inherent viscosity exceeding 1.5 is disclosed in U.S. Pat. No. 4,335,225 to Collette et al., issued June 15, 1982. This polymer does not, however, have the properties of the polymer produced according to the present invention.

The present invention provides a process for the production of high molecular weight amorphous propylene homopolymer that has elastic properties. A diethyl ether soluble fraction of the polymer has no isotactic crystallinity and an inherent viscosity less than 1.0 dl/g. The polymer is produced with a solid supported catalyst component and an organoaluminum component. The polymer of the present invention has a molecular weight such that the melt viscosity of the polymer is greater than 200,000 mPas (cps) at 190°C and the melt flow rate (MFR) at 230°C is less than 80 g/10 minutes. The polymer is a general purpose thermoplastic elastomer adaptable to a wide variety applications including films, filaments, fibers, sheet, molded articles, and other applications where elastomeric properties are desireable. The polymer may also be blended with other homopolymers and copolymers to produce blends having useful properties.

In accordance with the present invention there is provided a process for the production of an elastomeric amorphous propylene homopolymer comprising:

(a) polymerizing propylene monomer in the absence of added electron donors at a pressure of from 2.765 MPa (400 psig) to 3.8 MPa (550 psig) and at a temperature of from 54°C (130°F) to 66°C (150°F) with a catalyst system comprising:

(A) a solid catalyst component prepared by:

(i) co-comminuting magnesium halide support base and aluminum trihalide in a molar ratio from 8:0.5 to 8:3 in the absence of added electron donor; and
(ii) then co-comminuting the product of step (i) in the absence, of added electron donor with sufficient titanium tetrahalide to provide a molar ratio of magnesium halide to titanium tetrahalide from 8:0.4 to 8:1; and

(B) a trialkylaluminum co-catalyst component having from 1 to 9 carbon atoms in each alkyl group in a sufficient quantity to provide an Al/Ti ratio in the range from 50:1 to 600:1;

(b) maintaining the hydrogen partial pressure during polymerization at such a level that it does not exceed 4.0% of the reactor pressure;

(c) feeding sufficient catalyst quantities to the reactor to result in a polymer solids concentration in the reactor slurry of from 10 wt.% to 50 wt.%; and

(d) recovering an elastomeric propylene homopolymer with a melt viscosity greater than 200,000 mPas (cps) at 190°C, a melt flow rate at 230°C of less than 80 g/10 minutes and comprising from 35% to 55% of a diethyl ether soluble fraction, said diethyl ether soluble fraction being free of $^{13}$C isotactic crystallinity and having an inherent viscosity less than 1.0 dl/g.

The terminology "high molecular weight" as used herein refers to polymers having a melt viscosity at 190°C greater than 200,000 mPas (cps) and a melt flow rate (MFR) at 230°C less than 80 g/10 minutes. The polymer includes a diethyl ether soluble fraction that exhibits no isotactic crystallinity and an inherent viscosity less than 1.0 dl/g.

Isotactic crystallinity, as referred to herein, is determined by $^{13}$C Nuclear Magnetic Resonance (NMR). The $^{13}$C spectra are obtained at 125°C using a JEOL FX270 NMR spectrometer operating at a $^{13}$C frequency of 67.8 MHz with a proton decoupling of 269.65 MHz. A 12 microsecond pulse width (approximately 65°) and a 2.1 second pulse repetition rate is used for quantification. The samples are run as a solution of 0.1 gm of polymer in 2 ml of a 90/10 by weight solution of 1,2,4-trichlorobenzene and $D_6$-benzene. N-phenyl-1-napthylamine is used as an antioxidant (approximately 0.04M).

When a sample of polypropylene is tested for isotactic content as set forth above and then cooled to ambient temperature and held for 24 hours there may be a reduction in the area under the mmmm pentad peak if there is crystallization of sufficiently long isotactic sequences. The decrease in mmmm intensity is attributed to immobilization of isotactic pentads by crystallization and thereby provides a measure of the fraction of polymer crystallized. An NMR rigidity parameter is defined by Collette et al., <u>MACROMOLECULES</u> 22, 1358 (1989) as:

$$R_{nmr} = F_h - F_l(1 - F_h)/(1 - F_l)$$

Where $F_h$ and $F_l$ are the mmmm pentad fractions at the higher and lower temperatures, respectively. The relationship between
$R_{nmr}$ and crystallinity is given as:

$$R_{nmr} = 0.006+0.016(\% \text{ crystallinity})$$

An $R_{nmr}$ of less than or equal to zero would, therefore, indicate the absence of isotactic crystallinity.

The inherent viscosity of the polymer is determined by placing a 0.05 g sample in 100 ml of decahydronapthalene containing 0.1 g/l BHT (2,6-di-t-butyl-4-methyphenol) and heating the sample to 135°C under nitrogen as it is stirred with a magnetic stirrer for two hours. The mixture is poured through a filter stick into a Cannon-Ubbelohda viscometer and its efflux time is measured at 135°C and compared with that of the solvent alone. The inherent viscosity is then calculated as:

$$\text{Inherent viscosity} = (\ln T/T_o)/C$$

Where T is the efflux time of the mixture, $T_o$ is the efflux time of the solvent and C is the concentration of the polymer in grams/deciliter.

The solubility of the homopolymer in the solvents referred to herein is determined by placing a sample (6 grams) into a cellulose thimble. The thimble is placed into a vertical cylindrical chamber in a round bottom glass flask containing the solvent. The solvent is heated to boiling and solvent vapors rise through an outer zone surrounding the cylindrical chamber and are cooled in a reflux condenser. The condensed solvent drips onto the thimble and extraction continues for 16 hours. The portion of the sample extracted is the soluble portion.

Melting points and heats of fusion are measured with a Perkin Elmer DSC-2C Differential Scanning Calorimeter (DSC). Melting point is determined according to ASTM method D-3481. Melt flow rates are measured using a Tinius-Olsen extrusion plastometer in accordance with ASTM method D-1238. The propylene homopolymer of the present invention has a melting point between 145°C and 165°C and a heat of fusion of from 16.7 J/g (4 cal/gm) to 41.8 J/g (10 cal/gm). The polymer has a melt viscosity of from greater 200,000 mPas (cps) to greater than 2,000,000 mPas (cps) at 190°C and a melt flow rate of from 4 g/10 minutes to 80 g/10 minutes at 230°C.

The propylene homopolymer prepared according to the present invention comprises from 35% to 55% of a diethyl ether soluble fraction. The diethyl ether soluble fraction exhibits no $^{13}$C isotactic crystallinity and has an inherent viscosity less than 1.0 dl/g. The ether soluble fraction has no detectable melting point above 40°C., a further indication of the absence of crystallinity.

The propylene homopolymer prepared according to the present invention comprises from 30% to 70% of a heptane soluble fraction. The heptane soluble fraction of the homopolymer has a melting point between 100°C and 110°C. and a heat of fusion less than 8.4 J/g (2.0 cal/g). The heptane insoluble fraction of the homopolymer has a melting point between 145°C and 165°C and a heat of fusion between 41.8 J/g (10 cal/g) and 83.6 J/g (20 cal/g).

The homopolymer prepared according to the present invention is prepared by a process which comprises polymerizing propylene monomer in the presence of a particular catalyst composition. Polymerization should be conducted at a pressure sufficient to maintain propylene in the liquid phase, pressures in the range between 2.765 MPa (400 psig) and 3.8 MPa (550 psig) are used. The temperature is from 54°C (130°F) to 66°C (150°F).

Close control of the hydrogen concentration at a level such that the hydrogen partial pressure does not exceed about 4.0% of the reactor pressure during the preparation of the homopolymer of the present invention is important to produce a polymer with a melt viscosity at 190°C greater than 200,000 mPas (cps). Preferably, no hydrogen is introduced during polymerization, producing a polymer with a melt viscosity at 190°C greater than 2,000,000 mPas (cps).

The catalyst composition used to polymerize the amorphous high molecular propylene homopolymer contains a solid, supported catalyst component and an organoaluminum component. The supported catalyst component is comprised of titanium tetrahalide mixed with an enhanced support comprised of magnesium halide and aluminum trihalide. The molar ratio of magnesium halide to aluminum trihalide is 8:0.5-3.0 and preferably 8:1.0-1.5.

The molar ratio of magnesium halide to titanium tetrahalide is from 8:0.4-1.0 and preferably 8:0.4-0.6. The preferred magnesium halide is magnesium chloride. An important step in the preparation of the solid supported catalyst component is the exclusion of electron donor compounds. Additionally, polymerization of the homopolymer with the catalyst should be carried out in the absence of added electron donors.

The catalyst system used to prepare the homopolymer is a composition of:

(A) a solid catalyst component produced by the method comprising:

(i) co-comminuting magnesium halide support base and aluminum trihalide in a molar ratio from 8:0.5 to 8:3 in the absence of added electron donor; and

(ii) then co-comminuting the product of step (i) in the absence of added electron donor with sufficient titanium tetrahalide to provide a molar ratio of magnesium halide to titanium tetrahalide from 8:0.4 to 8:1; and

(B) a trialkylaluminum co-catalyst component having from 1 to 9 carbon atoms in each alkyl group in a sufficient quantity to provide an Al/Ti ratio in the range from 50:1 to 600:1.

Thus, the modified method involves co-comminuting magnesium halide and aluminum trihalide in the absence of an electron donor and then co-comminuting the catalyst support so formed with titanium tetrahalide, also in the absence of an electron donor.

The solid catalyst component is used in conjunction with an organoaluminum co-catalyst, which is a trialkylaluminum wherein each alkyl group contains between 1 and 9 carbon atoms. Preferably, the alkyl groups are ethyl groups. The invention will be described hereinafter in connection with the preferred catalyst system. The molar ratio of organoaluminum co-catalyst to titanium-containing catalyst component, i.e., Al/Ti ratio should range from 50:1 to 600:1, preferably between 90:1 and 300:1.

The polymerization is carried out in a stirred reactor at average residence times between about 1 hour and about 3 hours. Sufficient catalyst quantities are fed to the reactor to result in a polymer solids concentration in the reactor slurry of from 10 wt % to 50 wt %. The reactor effluent is withdrawn from the reactor, and unreacted monomer and hydrogen is flashed from the polymer.

Various additives can be incorporated into the polymer, such as antioxidants, U.V. stabilizers, pigments, etc.

An additional benefit of the polymer of this invention is that since the polymer contains small quantities of catalyst residues due to the high productivity rates of the specific catalyst used in the polymerization, there is no need to remove these small amounts of catalysts from the polymer.

The invention will be further described with respect to the following examples; however, the scope of the invention is not to be limited thereby.

Example 1

The experiment was performed in a 1-liter, jacketed autoclave equipped with a magnetically coupled stirrer. The temperature of the autoclave was controlled using a mixture of equal weights of glycol and water as the heat transfer fluid flowing the jacket of the autoclave. The temperature of the fluid was controlled with a microprocessor connected to an iron/constantin thermocouple inside the autoclave. Set point temperature was maintained at +/- 0.2°C. Propylene monomer was polymerization grade passed through molecular sieve beds, as well as beds of copper catalyst for oxygen removal prior to use. Triethylaluminum (TEA) was purchased as a 25% W/W in normal heptane and used as is. A 1% W/W slurry of the solid catalyst component was prepared using degassed mineral oil. Prior to use, the autoclave was heated to 90°C with a slow nitrogen purge for 30 minutes, cooled to 30°C, and purged with propylene vapor. The alkyl solution and catalyst slurry were prepared in septum vials in dry boxes and introduced into the reactor using hypodermic syringes.

1.98 ml. of TEA (25%) and 1.71 ml of 1% catalyst slurry (2.5% W/W titanium content) were added to the reactor. 0.6 liters of propylene monomer (300 g) was introduced using a sight gauge and nitrogen pressure. The reactor content was heated to 60°C and maintained for two hours while stirring at 500 rpm. After two hours, the temperature was rapidly lowered and the unreacted propylene vented. The polymer was dried under vacuum at 40°C overnight. Test results are set forth in Table 1 below.

<u>Example 2</u>

Polymerization of propylene homopolymer was conducted in a large scale continuous pilot plant operation. Propylene monomer and catalyst components were separately and continuously charged to a stirred reactor, the monomer feed rate corresponding to about a two hour residence time in the reactor. The organoaluminum compound of the catalyst system was a 5% W/W heptane solution of triethylaluminum (TEA). The solid supported titanium tetrachloride catalyst had a titanium content of about 2.5% W/W and was pumped into the reactor as a 6% W/W mixture in petrolatum. The two catalyst components were added at rates directly proportional to the polymer production rate and in amounts sufficient to maintain the polymer solids concentration in the reactor slurry in a range from about 10% to about 15%. The reaction temperature was maintained throughout at about 140°F (60°C). The catalyst efficiency was calculated from the polymer slurry withdrawal rate, solids content in the slurry, and the titanium catalyst addition rate. The polymer was separated from the unreacted monomer, stabilized with Irganox® 1010, pelletized, and tested. Test result are set forth in Table 1 below.

Table 1

|  | Example 1 | Example 2 |
|---|---|---|
| Melting point °C | 154.9 | 153.9 |
| Heat of fusion cal/g* | 7.7 | 6.1 |
| Melt flow rate g/10 min @ 230°C. | 5.7 | 9.7 |
| Melt viscosity mPas (cps) @190°C | >2,000,000 | >2,000,000 |
| Ether soluble fraction weight% | 42.8 | 44.0 |
| Inherent viscosity (ether soluble fraction) | 0.93 | 0.82 |
| Catalyst efficiency Kg polymer/g Cat | 11.8 | 6.8 |
| Heptane soluble fraction weight % | 43.8 | 62.8 |
| Melting point °C (heptane soluble fraction) | 105.6 | 105.8 |
| Heat of fusion cal/g* (heptane soluble fraction) | 0.6 | 1.6 |
| Melting point °C (heptane insoluble fraction) | 156.1 | 151.1 |
| Heat of fusion cal/g* (heptane insoluble fraction) | 14.4 | 15.1 |

* 1 cal/g = 4.18 J/g

Test bars of 0.125" thickness were produced from the polymer using a 75 Ton Van born Injection Molding machine. These bars were tested for tensile strength at break, elongation at break, and tensile set. The tensile set of the polymer was 69% at 300% elongation. No break was observed at 700% elongation.

Ether soluble fractions of the polymers of Examples 1 and 2 were extracted and tested for NMR isotactic crystallinity as described above. The results are set forth below.

Table 2

|  | Example 1 | Example 2 |
|---|---|---|
| NMR isotactic content @ 125°C ($F_h$) | 0.16 | 0.15 |
| NMR isotactic content @ 32°C ($F_l$) | 0.16 | 0.16 |
| NMR rigidity | 0 | <0 |
| NMR crystallinity | 0 | 0 |

Examples 3 and 4

Propylene monomer was polymerized in the same fashion as in Example 1 except that hydrogen was added to the reactor at a partial pressure of 5 psig** in Example 3 and 15 psig** in Example 4. Test results are set forth in Table 3 below.

Table 3

|  | Example 3 | Example 4 |
|---|---|---|
| Melting point °C | 155.8 | 157.4 |
| Heat of fusion cal/g* | 5.1 | 5.8 |
| Melt flow rate g/10 min @ 230°C. | 11.3 | 79.0 |
| Melt viscosity cps @190°C | >2,000,000 | 209,000 |
| catalyst efficiency Kg polymer/g Cat | 12.5 | 13.9 |
| Heptane soluble fraction weight % | 56.4 | 60.9 |
| Melting Pt. °C (heptane soluble fraction) | 106.6 | 110.4 |
| Heat of fusion cal/g* (heptane soluble fraction) | 1.0 | 1.1 |
| Melting Pt. °C (heptane insoluble fraction) | 157.7 | 158.4 |
| Heat of fusion cal/g* (heptane insoluble fraction) | 17.0 | 17.6 |

* 1 cal/g = 4.18 J/g

Comparative Examples 5 and 6

In order to illustrate the importance of hydrogen control in the preparation of the homopolymer of the present invention, propylene monomer was polymerized in the same manner as in Example 1, except that hydrogen was added at partial pressures of 45 and 70 psig** respectively. The polymers were tested and the results are set forth in Table 4 below.

** 1 psig = 6896.4 Pa excess pressure
** 1 psig = 6896.4 Pa excess pressure

Table 4

|  | Example 5 | Example 6 |
|---|---|---|
| $H_2$ partial pressure (psig)** | 45 | 70 |
| Melt-flow rate g/10 min @ 230°C | fluid | fluid |
| Melt viscosity cps @ 190°C | 6,300 | 1,730 |
| Heptane soluble fraction wt. % | 79.7 | 84.3 |
| Melting pt. °C (heptane soluble fraction) | 115.5 | 134.8 |
| Heat of Fusion cal/g* (heptane soluble fraction) | 2.3 | 3.1 |
| Melting pt. °C (heptane insoluble fraction) | 151.4 | 152.2 |
| Heat of Fusion cal/g* (heptane insoluble fraction) | 21.3 | 21.5 |

\* 1 cal/g = 4.18 J/g
\*\* 1 psig = 6896.4 Pa excess pressure

Comparative Examples 5 and 6 illustrate that the addition of excessive amounts of hydrogen results in the production of polymers having undesirably high melt flow rates and undesirably low melt viscosities.

While particular embodiments of the present invention have been described, it will be apparent to those skilled in the art that various changes and modification can be made without departing from the scope of the invention. The following claims are intended to cover all such modifications that are within the scope of the invention.

**Claims**

1. A process for the production of an elastomeric amorphous propylene homopolymer comprising:

   (a) polymerizing propylene monomer in the absence of added electron donors at a pressure of from 2.765 MPa (400 psig) to 3.8 MPa (550 psig) and at a temperature of from 54°C (130°F) to 66°C (150°F) with a catalyst system comprising:

   (A) a solid catalyst component prepared by:

   (i) co-comminuting magnesium halide support base and aluminum trihalide in a molar ratio from 8:0.5 to 8:3 in the absence of added electron donor; and
   (ii) then co-comminuting the product of step (i) in the absence of added electron donor with sufficient titanium tetrahalide to provide a molar ratio of magnesium halide to titanium tetrahalide from 8:0.4 to 8:1; and

   (B) a trialkylaluminum co-catalyst component having from 1 to 9 carbon atoms in each alkyl group in a sufficient quantity to provide an Al/Ti ratio in the range from 50:1 to 600:1;

   (b) maintaining the hydrogen partial pressure during polymerization at such a level that it does not exceed 4.0% of the reactor pressure;
   (c) feeding sufficient catalyst quantities to the reactor to result in a polymer solids concentration in the reactor slurry of from 10 wt.% to 50 wt.%; and
   (d) recovering an elastomeric propylene homopolymer with a melt viscosity greater than 200,000 mPas (cps) at 190°C, a melt flow rate at 230°C of less than 80 g/10 minutes and comprising from 35% to 55% of a diethyl ether soluble fraction, said diethyl ether soluble fraction being free of $^{13}$C isotactic crystallinity and having an inherent viscosity less than 1.0 dl/g.

2. The process of claim 1 wherein the homopolymer comprises from 30% to 70% of a heptane soluble fraction, the fraction having a melting point between 100°C and 110°C and a heat of fusion less than 8.4 J/g (2.0 cal/g).

3. The process of claim 1 wherein the homopolymer has a melting point between 145°C and 165°C and a heat of fusion between 16.7 J/g (4 cal/g) and 41.8 J/g (10 cal/g).

**Patentansprüche**

1. Verfahren zur Herstellung eines elastomeren, amorphen Propylen-Homopolymers, wobei das Verfahren umfaßt:

   (a) das Polymerisieren von Propylenmonomer in Abwesenheit zugefügter Elektronendonatoren bei einem Druck von 2,765 MPa (400 psig) bis 3,8 MPa (550 psig) und einer Temperatur von 54° C (130° F) bis 66° C (150° F) mit einem Katalysatorsystem, welches umfaßt:

   (A) eine feste Katalysatorkomponente, hergestellt durch:

   (i) gemeinsames Zerkleinern eines Magnesiumhalogenidträgers und eines Aluminium-trihalogenids in einem Molverhältnis von 8:0,5 bis 8:3 in Abwesenheit von zugefügtem Elektronendonator und
   (ii) danach gemeinsames Zerkleinern des Produktes aus Schritt (i) in Abwesenheit von zugefügtem Elektronendonator mit einer ausreichenden Menge Titantetrahalogenid, um ein Molverhältnis von Magnesiumhalogenid zu Titantetrahalogenid von 8:0,4 bis 8:1 einzustellen und

   (B) eine Trialkylaluminium-Cokatalysatorkomponente mit 1 bis 9 Kohlenstoffatomen in jeder Alkylgruppe in einer ausreichenden Menge, um ein Al/Ti-Verhältnis von 50:1 bis 600:1 einzustellen;

   (b) Aufrechterhalten des Wasserstoffpartialdrucks während der Polymerisation auf einem solchen Niveau, daß er 4,0% des Reaktordrucks nicht übersteigt;
   (c) Zuführen ausreichender Katalysatormengen zu dem Reaktor, so daß sich eine Polymer-Feststoffkonzentration in der Reaktoraufschlämmung von 10 Gew.-% bis 50 Gew.-% ergibt und
   (d) Gewinnung eines elastomeren Propylen-Homopolymers mit einer Schmelzviskosität von mehr als 200.000 mPas (cps) bei 190° C, einer Fließfähigkeit bei 230° C von weniger als 80 g/10 Min. und einem Gehalt von 35% bis 55% einer löslichen Diethyletherfraktion, wobei die genannte lösliche Diethyletherfraktion keine isotaktische $^{13}$C-Kristallinität aufweist und eine logarithmische Viskositätszahl von weniger als 1,0 dl/g hat.

2. Verfahren nach Anspruch 1, wobei das Homopolymer von 30% bis 70% einer löslichen Heptanfraktion umfaßt, die einen Schmelzpunkt zwischen 100° C und 110° C und eine Schmelzwärme von weniger als 8,4 J/g (2.0 cal(g) aufweist.

3. Verfahren nach Anspruch 1, wobei das Homopolymer einen Schmelzpunkt zwischen 145° C und 165° C und eine Schmelzwärme zwischen 16,7 J/g (4 cal/g) und 41,8 J/g (10 cal/g) aufweist.

**Revendications**

1. Procédé pour la fabrication d'un homopolymère amorphe élastomère de propylène comprenant :

   (a) la polymérisation d'un monomère de propylène en l'absence de donneurs d'électrons ajoutés à une pression allant de 2,765 MPa (400 psig) à 3,8 MPa (550 psig) et à une température allant de 54°C (130°F) à 66°C (150°F) avec un système de catalyseur comprenant :

   (A) un composant de catalyseur solide préparé :

   (i) en co-broyant une base support en halogénure de magnésium et un trihalogénure d'aluminium dans un rapport en moles allant de 8:0,5 à 8:3 en l'absence d'un donneur d'électrons ajouté ; et
   (ii) ensuite en co-broyant le produit issu de l'étape (i) en l'absence d'un dormeur d'électrons ajouté avec suffisamment de tétrahalogénure de titane pour obtenir un rapport en moles d'halogénure de magnésium par rapport au tétrahalogénure de titane allant de 8:0,4 à 8:1; et

   (B) un composant co-catalyseur de trialkylaluminium ayant de 1 à 9 atomes de carbone dans chaque groupe alkyle en une quantité suffisante pour obtenir un rapport Al/Ti compris dans la gamme allant de 50:1 à 600:1;

   (b) le maintien de la pression partielle d'hydrogène pendant la polymérisation à un niveau tel qu'elle ne dépasse pas 4,0 % de la pression du réacteur ;

(c) l'apport de quantités de catalyseur suffisantes jusqu'au réacteur pour avoir une concentration de solides polymères dans la bouillie de réacteur allant de 10% en poids à 50% en poids ; et

(d) la récupération d'un homopolymère élastomère de propylène avec une viscosité à l'état fondu supérieure à 200 000 mPas (cps) à 190°C, un débit d'écoulement à l'état fondu à 230°C inférieur à 80g/10 minutes et comprenant de 35 % à 55 % d'une fraction soluble d'éther diéthylique, ladite fraction soluble d'éther diéthylique étant dépourvue de cristallinité isostatique $^{13}$C et ayant une viscosité intrinsèque inférieure à 1,0 dl/g.

2. Procédé selon la revendication 1, dans lequel l'homopolymère comprend de 30 % à 70 % d'une fraction soluble d'heptane, la fraction ayant un point de fusion compris entre 100°C et 110°C et une chaleur de fusion inférieure à 8,4 J/g (2,0 cal/g).

3. Procédé selon la revendication 1, dans lequel l'homopolymère a un point de fusion compris entre 145°C et 165°C et une chaleur de fusion comprise entre 16,7 J/g (4 cal/g) et 41,8 J/g (10 cal/g).